# EUROPEAN PATENT SPECIFICATION

(11) **EP 4 405 589 B1**
(45) Date of publication and mention of the grant of the patent: **25.03.2026**
(21) Application number: 22743892.6
(22) Date of filing: 27.06.2022
(51) Int. Cl.: F04D 29/42, F04D 29/62, F04D 29/12, F16J 15/34

(54) **SELF-PRIMING CENTRIFUGAL PUMP ASSEMBLY WITH MULTIFUNCTIONAL SEALING SYSTEM**
SELBSTANSAUGENDE KREISELPUMPENANORDNUNG MIT MULTIFUNKTIONALEM DICHTUNGSSYSTEM
ENSEMBLE POMPE CENTRIFUGE À AMORÇAGE AUTOMATIQUE DOTÉ D'UN SYSTÈME D'ÉTANCHÉITÉ MULTIFONCTIONNEL

(30) Priority: 06.07.2021 IT 202100017732
(43) Date of publication of application: 31.07.2024
(73) Proprietor: Varisco S.r.L., 35129 Padova (PD) (IT)
(72) Inventor: FERRARESE, Giulio, 37047 San Bonifacio (VR) (IT); GAMBA, Alessandro, 35020 Legnaro (PD) (IT); KUPTCOV, Semen, 35141 Padova (PD) (IT)
(74) Representative: Maroscia, Antonio
(86) International application number: PCT/IB2022/055929
(87) International publication number: WO 2023/281348

(56) References cited:
- EP-A1- 2 927 544
- US-A- 3 081 095
- US-A- 5 409 350

## Description

### Field of the invention

The present invention generally finds application in the field of centrifugal operating machine and particularly relates to a self-priming centrifugal pump assembly with a multifunctional sealing system.

In a second aspect, the invention relates to a method of servicing a centrifugal pump assembly with a sealing system of the aforementioned type.

### Background Art

Self-priming pumps are known to be a type of negative head pumps that require proper priming for proper operation.

Self-priming pumps have a suction lift to about 7-8 m. These pumps can prime by themselves and operate even without filling the suction line.

In addition, such line is not required to be equipped with a check valve that normally prevents the suction line from being emptied each time the pump is stopped.

The self-priming pumps of this invention are suitable for use in the field of building, for power generating sets, in municipalities, urban wastewater, mining, bilge drainage, flood drainage, mines, sewerage, fire-fighting.

One problem with these pumps is that they are forced to operate for some time without liquid, for example during the priming stage.

Here, the seals between the stationary and rotating parts are likely to "run dry" and are prone to breaking or burning.

Attempts have been made to obviate this drawback by providing either a quench system to flush the sealing ring faces with a suitable coolant, typically oil, for cooling these faces, or a heating agent, e.g. steam, to heat the same faces in case of cartridges with waxes or polymers that remain liquid only when kept at a certain temperature.

The seal usually comprises a lip seal that interacts with a tubular spacer mounted to the shaft to resist wear, and a mechanical seal to isolate the wet part of the pump from the dry part near the motor bracket.

At present, the maintenance of mechanical seals is very complex and requires the action of specially skilled operator.

In addition, the lip seal adjacent to the quench circuit cannot be usually replaced on site.

Therefore, the need is felt for easier servicing of self-priming pumps in any working and logistical condition by non-specially skilled personnel.

A further drawback of this type of pump is that under certain operating conditions a very high vacuum can be established in the pump, which may lead to suction and thus removal of the mechanical seal from the seat of the stationary part, with disastrous consequences for pump operation.

Another drawback of these known self-priming pumps is the possible failure of or leakage from a seal located at the edge of the wet area of the pump. Here, leakage may cause fluid infiltration into the dry area and affect critical components, such as a shaft bearing immediately downstream of the seal, with serious risk of damage to the bearing and pump blockage.

US 2010/090412 discloses a sealing system comprising a cartridge with a support spacer element designed to fit onto the shaft and having a ring for holding a spring, a centering washer, a bellows seal, a mechanical seal with a stationary ring and a moving ring.

US 2016/108926 discloses a sealing system with a cartridge seal for a centrifugal pump that uses a compressed gas for cartridge sealing.

US5409350 discloses a sealing system with a cartridge for a centrifugal pump, which comprises a bearing and a mechanical seal with a stationary part and a rotating part facing each other.

The stationary part is housed in a housing and the moving part is housed in a housing with holes for circulation of a coolant. The sealing system does not include a spacer fitting onto the drive shaft or a retaining ring to hold the cartridge in place.
Also EP2927544 and US3081095 disclose sealing systems with a cartridge for pumps. However, such known sealing systems cannot be removed and replaced without accessing the bearings for supporting the drive shaft.

### Technical Problem

In view of the prior art, the invention has the object to simplify servicing of the sealing system in any operating condition by avoiding the need to fully disassemble the pump, and also to prevent damage to the pump due to removal of part of the mechanical seal as a result of the vacuum effect, as well as deterioration of the bearings in the dry area of the pump caused by breakage of or leakage from the seal between the wet area and the dry area of the pump.

### Disclosure of the invention

The object of the present invention is to solve the aforementioned technical problems and obviate the above drawbacks by providing a self-priming centrifugal pump assembly with a multifunctional sealing system, that is highly efficient and relatively cost-effective.

A particular object of the present invention is to provide an assembly of the aforementioned type that facilitates removal and replacement of seals even when the pump is on site.

A particular object of the present invention is to provide an assembly of the aforementioned type that prevents dry running of the wiping-contact surfaces of the mechanical seal.

A particular object of the present invention is to provide an assembly that can simply servicing and allow it to be carried out even by non-specially skilled personnel.

A further object is to provide an assembly that avoids the risk of removal of the stationary part of the mechanical seal as a result of the high vacuum created in the volute of the pump.

Yet another object is to provide an assembly that prevents the ingress of liquid into the dry part of the pump, which would cause damage to the bearings as a result of failure or leakage from a broken seal.

These and other objects, as more clearly explained hereafter, are fulfilled by a self-priming centrifugal pump assembly with a multifunctional sealing system as defined in claim 1.

Conveniently, the pump comprises a housing having a downstream wet area contacted by the working fluid and an upstream dry area not contacted by the working fluid and equipped with bearings for a drive shaft. The pump also comprises a volute pressure chamber in the downstream area, which is designed to accommodate an impeller intended to be keyed to the drive shaft.

The multifunctional sealing system comprises a tubular spacer mounted to the shaft and adapted to be attached to the shaft proximate the impeller, a mechanical seal mounted to the spacer, at least one first lip seal, and a locking ring for attaching the mechanical seal to the pump housing.

Advantageously, the pressure chamber has a suction port whose inside diameter is larger than that of the impeller and a front closing flange whose inside diameter is smaller than that of the impeller. The locking ring is designed to be secured to the pump housing by removable fastening means, that can be accessed through the suction port of the pump after removal of its front closing flange to allow removal of the impeller, the mechanical seal and the lip seal and replacement or servicing without disassembling the pump and without accessing the bearings in the dry area.

This arrangement will greatly simplify servicing of the mechanical seal and replacement of the seals, which may occur without completely disassembling the pump. Of course, simplified servicing will also reduce pump operation times and costs.

In addition, the bearings are protected in case of leakage.

In a further aspect, the invention provides a method of servicing a self-priming centrifugal pump assembly with a multifunctional sealing system as defined in claim 15.

The method comprises at least the steps of providing a suction port in the pressure chamber, whose inside diameter is larger than that of the impeller and a front closing flange whose inside diameter is smaller than that of the impeller, removing a connecting joint from the suction line, removing the front closing flange, axially pulling off the impeller from the pressure chamber, removing fastening means, removing the locking ring from the compartment of the intermediate housing in combination with the cartridge assembly with the lip seal joined thereto or removing the locking ring from the compartment of the intermediate housing in combination with the half-cartridge assembly and removing the lip seal, replacing the lip seal and possibly the mechanical seal or some of its components, repositioning the locking ring with the cartridge or half-cartridge system, mounting the impeller back to the shaft and mounting the connecting joint back to the suction line.

Conveniently, removal of the impeller from the shaft and the locking ring from its seat of the intermediate housing, as well as repositioning thereof, are carried out through the suction port after disassembly and removal of the front closing flange without completely disassembling the pump.

In addition, the cartridge or half-cartridge is removed without removing the bearings from the dry area of the pump housing.

With this method even partial disassembly of the pump and its accessories may be avoided, which greatly simplifies servicing and replacement of gaskets and/or mechanical seals.

Advantageous embodiments of the invention are obtained in accordance with the dependent claims.

### Brief description of the drawings

Further features and advantages of the invention will be more apparent from the detailed description of a preferred, non-exclusive embodiment of a multifunctional sealing system of the invention, which is described as a non-limiting example with the help of the annexed drawings, in which:

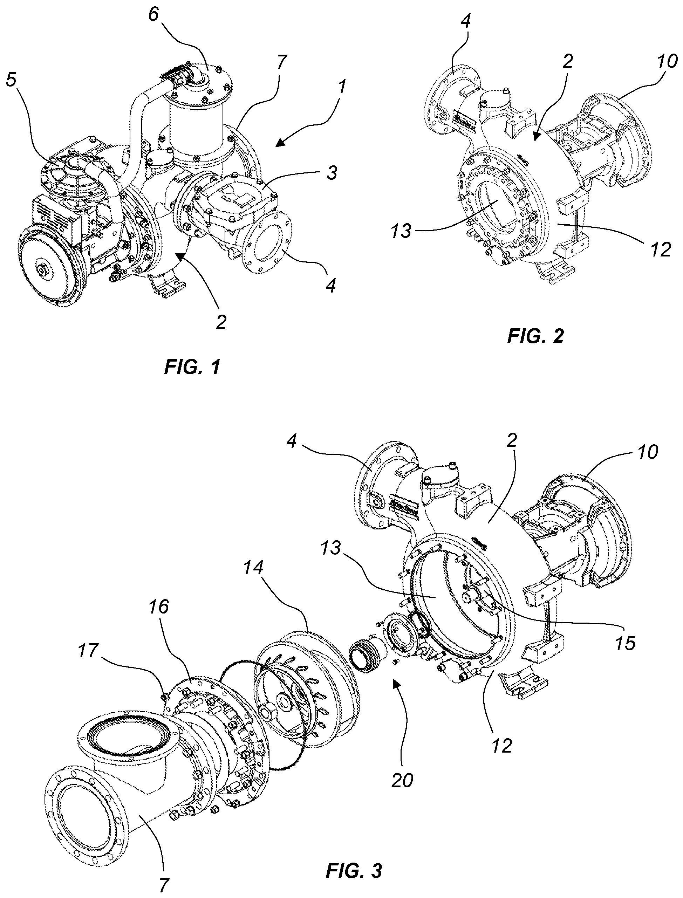

**FIG. 1** is an axonometric view from the delivery port side of a self-priming centrifugal pump with the sealing system of the invention mounted thereon;
**FIG. 2** is an axonometric view of the pump housing of **FIG. 1** without the motor as viewed from the suction port side;
**FIG. 3** is an axonometric view of the pump housing of **FIG. 2** with certain details removed to show a step of the method of servicing the sealing system of the invention;
**FIG. 4** is a broken-away view of the pump housing of **FIG. 1** without the motor and without accessories, as taken along an axial vertical plane in a first embodiment with a cartridge sealing assembly;
**FIG. 5** is an enlarged view of the section of **FIG. 4****,** showing the sealing system of the invention in greater detail;
**FIG. 6** is an exploded axonometric view of the sealing system of **FIG. 4****;**
**FIG. 7** is an enlarged exploded axonometric view of the sealing system of **FIG. 5**;
**FIG. 8** is an axonometric view of a detail of the sealing system of **FIGS. 4** and **5****;**
**FIG. 9** is a front view of the detail of **FIG. 8****;**
**FIG. 10** is a lateral sectional view of the detail of **FIG. 8****;**
**FIG. 11** is a front view of another detail of the sealing system of **FIGS. 4** and **5****;**
**FIG. 12** is a lateral sectional view of the detail of **FIG. 11****;**
**FIG. 13** is a broken-away lateral view of the pump of **FIG. 1** without the motor and without accessories, as taken along an axial vertical plane in a second embodiment with a half-cartridge sealing assembly;
**FIG. 14** is an enlarged view of the section of **FIG. 13****,** showing the sealing system of the invention in greater detail;
**FIG. 15** is an exploded axonometric view of the sealing system of **FIG. 13****;**
**FIG. 16** is an enlarged exploded axonometric view of the sealing system of **FIG. 15****;**
**FIG. 17** is an axonometric view of a detail of the sealing system of **FIGS. 13** and **14****;**
**FIG. 18** is a front view of the detail of **FIG. 17****;**
**FIG. 19** is a lateral sectional view of the detail of **FIG. 17****;**
**FIG. 20** is a front view of another detail of the sealing system of **FIGS. 13** and **14****;**
**FIG. 21** is a lateral sectional view of the detail of **FIG. 20****;**
**FIG. 22** is an axonometric view of a detail of the sealing system of the invention;
**FIG. 23** is a partially broken-away lateral view of the detail of **FIG. 22** as taken along an axial vertical plane;
**FIG. 24** is an axonometric view of an area of the pump contacted by the quench fluid;
**FIG. 25** is a partially broken-away lateral view of the area as shown in **FIG. 24****.**

### Detailed description of a preferred exemplary embodiment

Referring to the aforementioned figures, there is shown a self-priming centrifugal pump assembly **1** with a multifunctional sealing system **20.**

The pump **1** comprises a housing **2,** a non-return valve **3** mounted to the delivery port **4,** a vacuum pump **5** for priming the pump, an air/liquid separator **6** connected to the vacuum pump **5** and connected to a stub **7** at the suction port.

More in detail, the pump housing **2** comprises a downstream area **8,** conventionally known as "wet", contacted by the working fluid, and an upstream area **9,** conventionally known as "dry".

The upstream area **9** has an essentially bell-shaped end portion **10,** that must not be accessed by the working fluid for motor safety.

The two areas **8, 9** are connected to each other by an essentially annular intermediate housing **11** which has the purpose to support the motor, not shown.

The dry area **9** has bearings **10', 10"** for supporting a drive shaft **15.**

The pump housing **2** consists of a conventional pressure chamber **12,** located in the downstream area **8,** usually shaped as a volute of predetermined geometry, which has a suction port **13** and accommodates an impeller **14** with radial or axial-radial blades, also of predetermined geometry, which are designed to convert kinetic energy into pressure energy.

The impeller **14** is removably keyed to the shaft **15** having a longitudinal axis L, by means of removable connection components of known type, such as a key and a nut tightened to the threaded end of the shaft **15.**

In one embodiment, the suction port **13** is equipped with a front closing flange **16** which is secured to the pressure chamber **12** by a ring of fastening bolts **17.**

Advantageously, the pressure chamber **12** has a suction port **13** whose inside diameter is larger than that of the impeller **14** and the closing flange **16** has an inside diameter that is smaller than that of the impeller **14.**

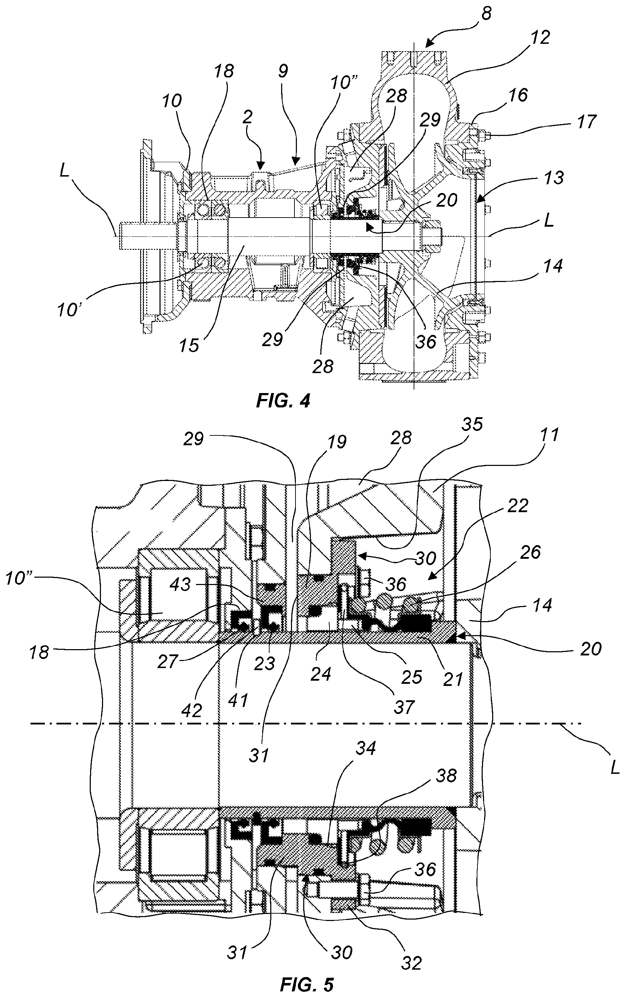

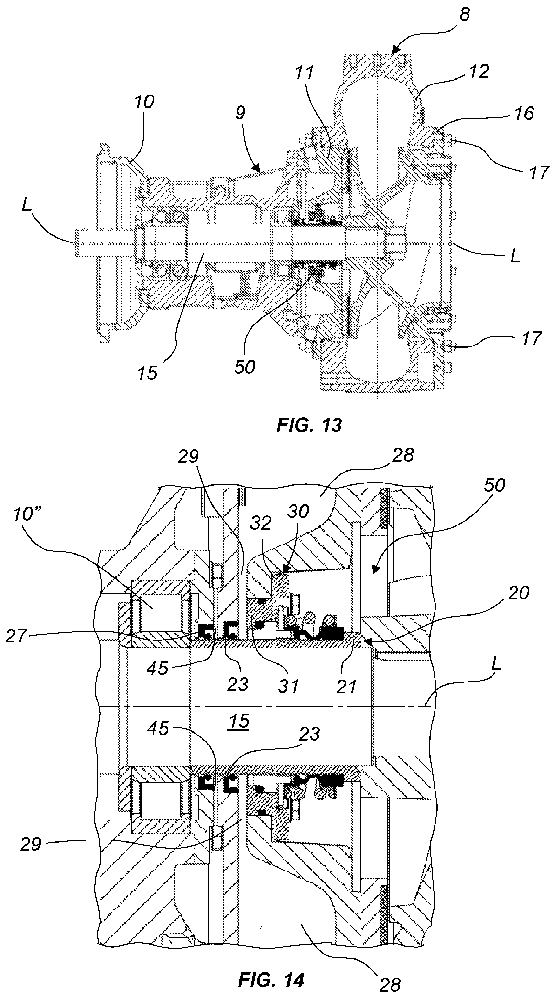

The invention provides a multifunctional sealing system, generally designated by numeral **20** and shown in a sectional view, according to a first embodiment in **FIGS. 4** and **5** and to a second embodiment in **FIGS. 13** and **14****.** The multifunctional sealing system **20** has the purpose to separate the two areas **8, 9** for safety reasons and to allow proper operation of the pump **1.**

The sealing system **20** comprises an essentially tubular spacer **21,** which is adapted to be mounted and attached to the drive shaft **15** proximate the impeller **14.**

A so-called mechanical seal **22** is mounted to the periphery of the spacer **21,** and at least one first lip seal **23** with an inner peripheral lip or edge is in wiping contact with the outer cylindrical surface of the spacer **21,** to seal the wet area **8** from the dry area **9** of the pump **1.**

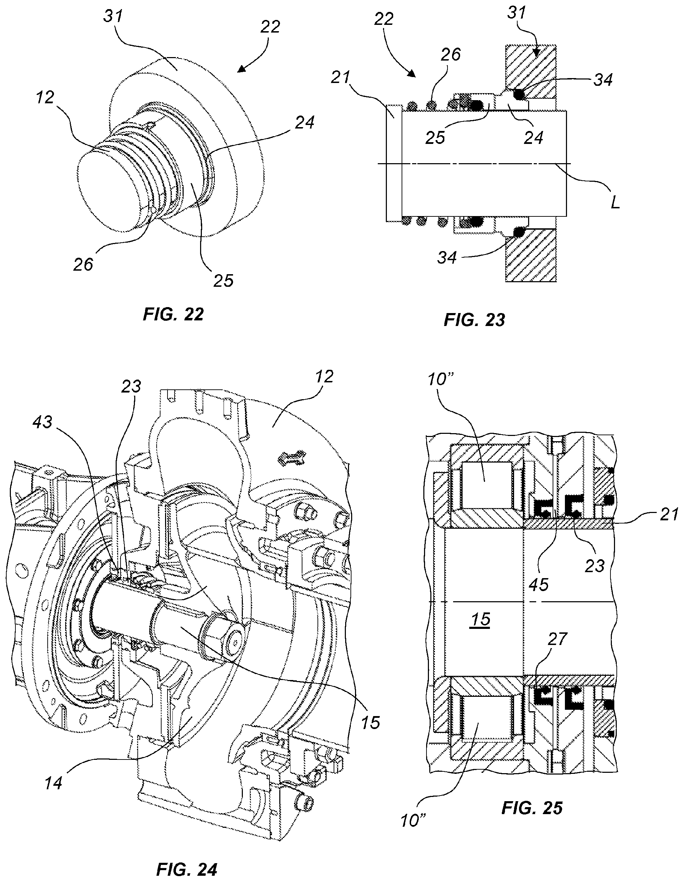

Conventionally, the mechanical seal **22,** which is shown separately in **FIGS. 22** and **23****,** comprises a stationary ring **24,** a moving ring **25,** coaxial and facing the stationary ring **24,** rotating about the axis **L** and axially moving therealong, as well as elastic means **26,** for example in the form of a coil spring, acting on the moving ring **25** to move its active lapped surface to wiping contact with the facing surface of the stationary ring **24.**

Optionally, elastic bellows may be provided within the spring **26** to protect the mechanical seal **22.**

In addition, a second lip seal **27** facing the first lip seal **23,** and also having its peripheral edge in wiping contact with the outer cylindrical surface of the spacer **21,** may be provided in a seat **18** of the upstream area **9.**

Conveniently, a cavity **28** filled with a quench fluid is provided in the intermediate housing **11.** The cavity **28** has a narrow passage **29** which is used to channel the quench liquid to the wiping-contact surfaces of the stationary ring **24** and the moving ring **25** of the mechanical seal **22.** In particular, the passage **29** consists in spraying the wiping surfaces of the mechanical seal **22** when no liquid is present during the first startup stages when the pump **1** has not yet been primed and its pressure chamber **12** has not yet been filled with water.

In order to attach the mechanical seal **22** to the pump housing **2,** the seal system **20** also includes a locking ring **30.**

According to the invention, the locking ring **30** is fastened to the pump housing **2,** or rather to the intermediate housing **11,** by means of removable fastening means **36** that can be removed and accessed through the suction port **13** of the pump **1** after removal of its front closing flange **16.**

With this configuration, the impeller **14,** the mechanical seal **22** and the lip seal **23** may be pulled off and replaced or serviced without disassembling the pump **1** and without accessing the bearings **10', 10"** of the dry area **9.**

More in detail, the locking ring **30** is essentially a toroidal body which may define therein an inner tubular portion **31** joined to a radial part **32** in coaxial arrangement, and with a first annular recess **33** formed therebetween.

Conveniently, the moving ring **25** is accommodated in the first annular recess **33** of the locking ring **30** facing the impeller **14.**

The tubular portion **31** is locked in a first cylindrical seat **19** of the intermediate housing **11** with the interposition of a first O-ring.

In addition, a second cylindrical seat **34** is formed in the tubular section **31,** in the locking ring **30,** in which the stationary ring **24** is inserted and locked with the interposition of a second O-ring.

The radial part **32** is in turn accommodated in a compartment **35** of the intermediate housing **11** and is attached in that compartment **35** by multiple fastening means **36** of bolt type, preferably six in number.

With this configuration, the mechanical seal **22** and the lip seal **23** may be pulled out during servicing, after removing the impeller **14,** without entirely disassembling the pump **1.**

According to the invention, an anti-slip ring **37** is locked in the first annular recess **33** against the edge of the stationary ring **24** by means of a first elastic retaining ring **38** located in the compartment **35** of the intermediate housing **11.**

The purpose of this anti-slip ring **37** is to prevent the displacement of the stationary ring **24** toward the impeller **14** under the high vacuum generated thereby.

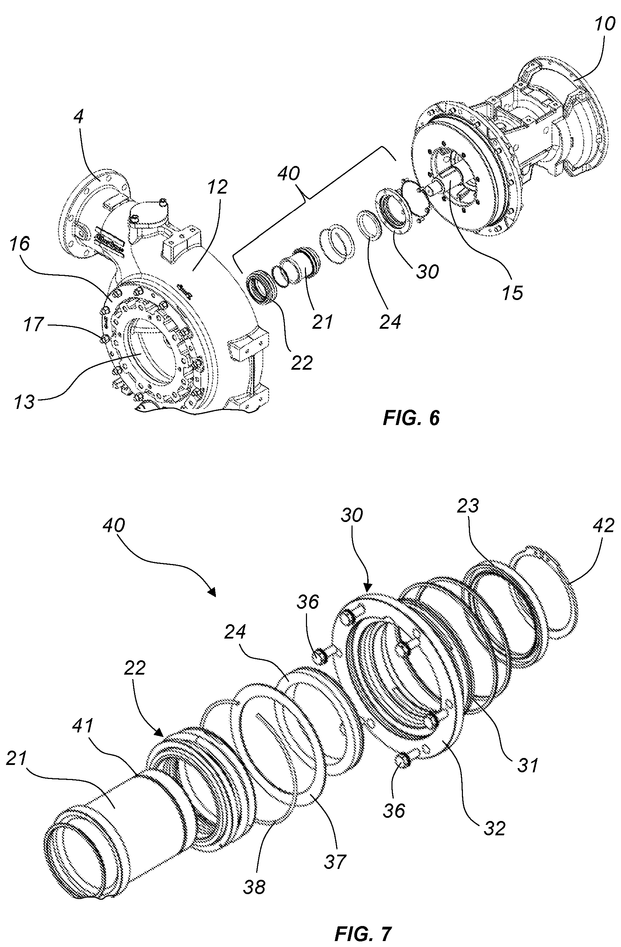

In a first embodiment of the invention, as clearly shown in the cross section of **FIG. 4** and in the exploded views of **FIGS. 6** and **7****,** the mechanical seal **22** and the lip seal **23** are both attached to the spacer **21** to define a so-called cartridge assembly, generally designated by numeral **40.**

The cartridge assembly **40** can be removed as a whole from the shaft **15** when one or more of its components are removed and replaced.

For this purpose, the spacer **21** has an annular groove **41** proximate one axial end distal from the impeller **14** for a second elastic retaining ring or circlip **42** which axially locks the lip seal **23** in a second annular recess **43** of the locking ring **30** thereby defining the cartridge assembly **40.**

The function and purpose of the second retaining ring or circlip **42** is to prevent disassembly of the cartridge system **40** when removing the locking ring **30** from the compartment **35** of the intermediate housing **11** and, on the other hand, to afford easy and proper positioning thereof back in place.

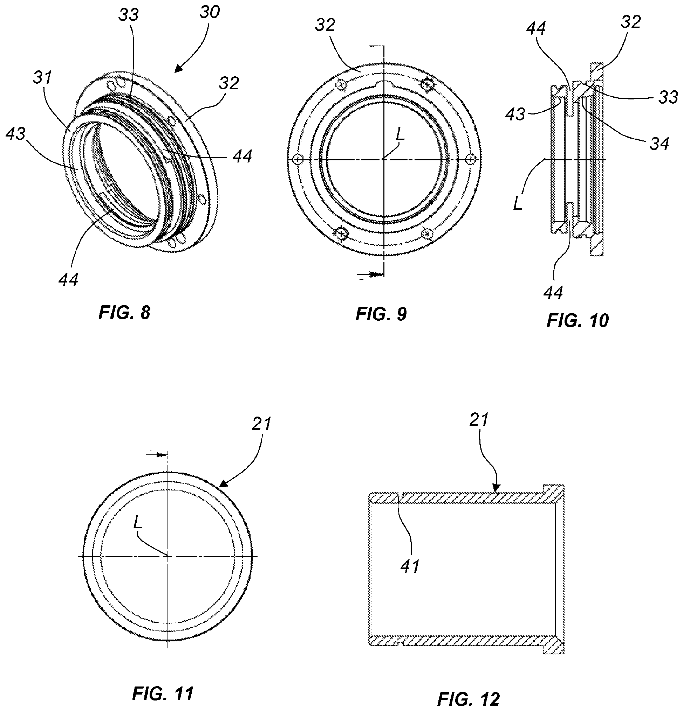

In this embodiment, the locking ring **30,** as best shown in **FIGS. 8, 9** and **10****,** has an elongate inner tubular portion **31** having the second annular recess **43** and at least one pair of diametrically opposite through slots **44,** substantially aligned with the passage **29** of the quench liquid to spray the dry wiping-contact surfaces of the mechanical seal **22,** as clearly shown in **FIGS. 8** and **10****.**

In particular, the locking ring **30** has a tubular portion **31** with a second annular recess **43** to accommodate and stably attach the lip seal **23** proximate an axial end of the tubular portion **31** distal from the locking ring **14.**

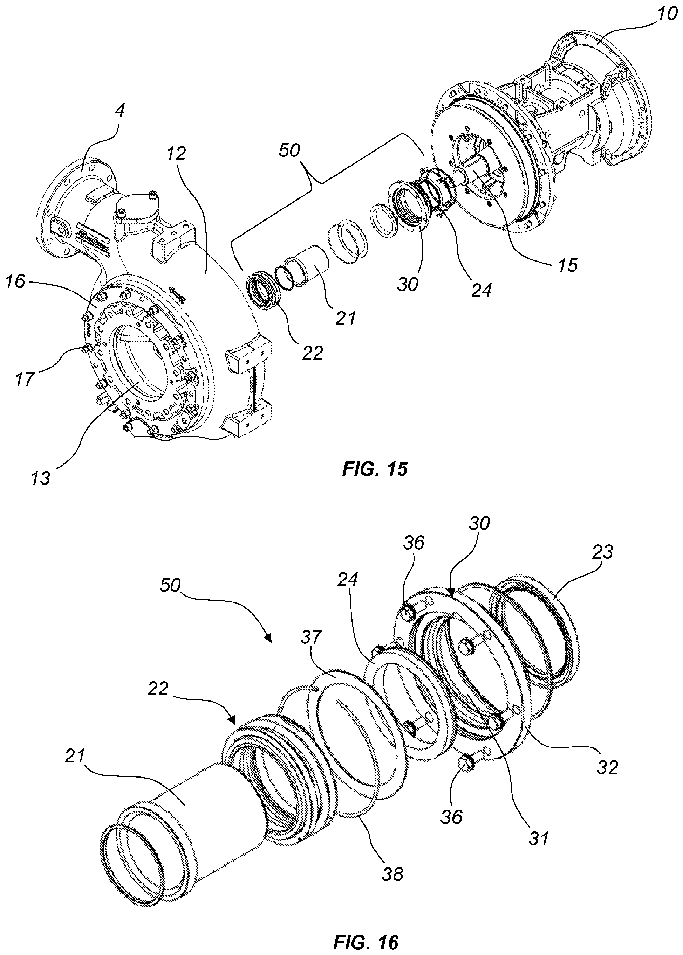

In a second embodiment of the invention, as clearly shown in the cross section of **FIG. 14** and in the exploded views of **FIGS. 15** and **16****,** only the mechanical seal **22** is attached to the spacer **21** to define a so-called half-cartridge assembly, generally designated by numeral **50.**

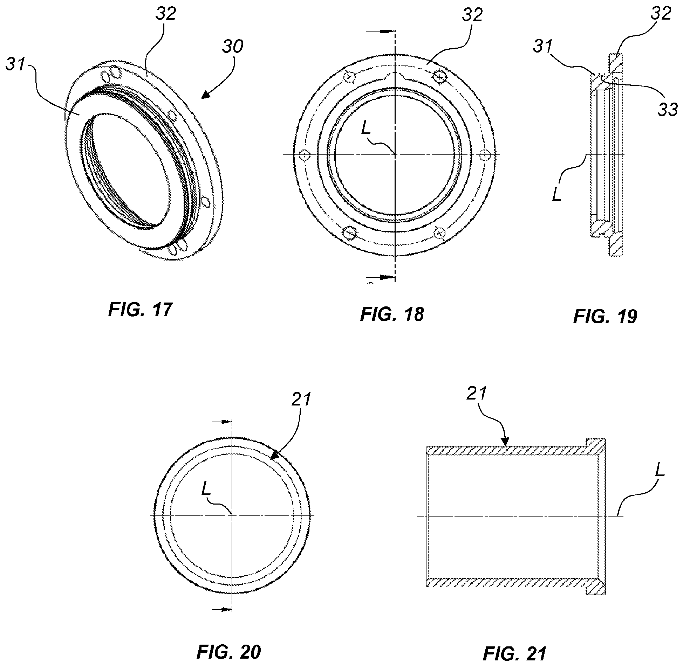

In this second embodiment, the locking ring **30,** as best shown in **FIGS. 17, 18** and **19****,** has an inner tubular portion **31** that is shorter than that of the first embodiment as shown in **FIGS. 8, 9** and **10****.**

Here, the half-cartridge assembly **50** can be slipped off the shaft **15** to remove the spacer **21** with the mechanical seal **22** and easily access the lip seal 23, which can be thus removed and replaced.

According to the invention, an annular outlet port **45** is provided downstream of the lip seal **23,** and communicates with the atmosphere to drain the working liquid in the event of failure of the lip seal **23** and to prevent the liquid from reaching the dry area **9** of the pump housing **2** and damaging the bearings **10', 10"** of the shaft **15.**

In a further aspect, the invention provides a method of servicing a self-priming centrifugal pump assembly **1** with a multifunctional sealing system **20,** which comprises at least the steps of:
**a)** providing a suction port **13** in the pressure chamber **12,** whose inside diameter is larger than that of the impeller **14** and a front closing flange **16** whose inside diameter is smaller than that of the impeller **14;**
**b)** disassembling the connecting joint **7** from the suction line;
**c)** removing the front closing flange **16;**
**d)** axially pulling out the impeller **14** from the pressure chamber **12;**
**e)** removing the screws **36** that fasten the locking ring **30;**
**f)** removing the locking ring **30** from the compartment **35** of the intermediate housing **11** in combination with the cartridge assembly **40** with the lip seal **23** joined thereto; or
**f')** removing the locking ring **30** from compartment **35** of the intermediate housing **11** in combination with the half-cartridge assembly **50** and removing the lip seal **23;**
**g)** replacing the lip seal **23** and possibly the mechanical seal **22** or some of its components;
**h)** repositioning the locking ring **30** with the cartridge **40** or half-cartridge assembly **50;**
**i)** mounting the impeller **14** back to the shaft **15;**
**j)** mounting the connecting joint **7** back to the suction line.

According to the invention, removal of the impeller **14** from the shaft **15** and the locking ring **30** from its seat of the intermediate housing **11,** as well as repositioning thereof, are carried out through the suction port **13** after disassembly and removal of the front closing flange **16.**

Advantageously, removal of the impeller **14** from the shaft **15** and the locking ring **30** from the compartment **35** of the intermediate housing **11,** as well as repositioning thereof, are carried out through the suction port **13** after disassembly and removal of the front closing flange **16** without completely disassembling the pump **1.**

According to the claimed invention, the steps **f)** or **f)'** are carried out without removing the bearings **10', 10"** from the dry area **9** of the pump housing **2.**

This avoids exposure of the bearings **10', 10"** when servicing the pump **1,** thus reducing the risk of damage to the bearings **10', 10".**

Of course, no intermediate steps have been described involving removal and mounting back O-rings in areas that require hydraulic blocking or sealing.

In general, this method avoids full disassembly of the pump and its accessories, thereby considerably facilitating servicing and replacement of gaskets and/or mechanical seals, which may also be carried out by non-specially skilled personnel and directly in the areas of use, e.g. on site.

In light of the foregoing, the self-priming centrifugal pump assembly with the multifunctional sealing system of the invention fulfills its intended purposes, and is namely configured to facilitate servicing of the mechanical seal and the lip seal in both cases of cartridge- and half-cartridge assembly, while reducing the risk of damage to the bearings.

While the assembly has been described with particular reference to the accompanying figures, the numerals referred to in the disclosure and claims are only used for the sake of a better intelligibility of the invention and shall not be intended to limit the claimed scope in any manner.

### Industrial Applicability

The present invention may find application in industry, because it can be produced on an industrial scale in factories for manufacturing pumps and centrifugal operating machines.

## Claims

1. A self-priming centrifugal pump assembly **(1)** with a multifunctional sealing system **(20),** wherein the pump **(1)** comprises a housing **(2)** having a downstream wet area **(8)** contacted by the working fluid and an upstream dry area **(9)** not contacted by the working fluid and equipped with bearings **(10', 10")** for supporting a drive shaft **(15),** a volute pressure chamber **(12)** located in said downstream area **(8)** to accommodate a vane impeller **(14)** which is designed to be keyed to said shaft **(15)** and wherein the sealing system **(20)** comprises:
- a tubular spacer **(21)** mounted to the shaft **(15)** and adapted to be attached thereto proximate the impeller **(14);**
- a mechanical seal **(22)** mounted to said spacer **(21);**
- at least one first lip seal **(23);**
- a locking ring **(30)** for attaching said mechanical seal **(22)** to said pump housing **(2);**
wherein said locking ring **(30)** is designed to be fastened to said housing **(2)** by removable fastening means **(36);**
**characterized in that** said pressure chamber **(12)** has a suction port **(13)** whose inside diameter is larger than that of the impeller **(14)** and a front closing flange **(16)** whose inside diameter is smaller than that of the said impeller **(14),** said removable fastening means **(36)** being configured to be accessed through the suction port **(13)** of the pump **(1)** after removal of its front closing flange **(16),** in such a manner that the impeller **(14),** said mechanical seal **(22)** and said lip seal **(23)** can be removed and replaced or serviced without disassembling the pump **(1)** and without accessing the bearings **(10', 10")** of said dry area **(9).**

2. Assembly as claimed in claim 1, wherein at least one outlet port **(45)** is provided downstream of the said at least one lip seal **(23)** to drain the working fluid in the event of its failure and to prevent the liquid from reaching the dry area **(9)** of the pump **(1)** thereby damaging said bearings **(10', 10").**

3. Assembly as claimed in claim 1, wherein said locking ring **(30)** has a radial portion **(32)** adapted to be accommodated in a compartment **(35)** of an intermediate housing **(11)** of the pump housing **(2),** a plurality of holes being provided for the passage of bolts defining said removable fastening means **(36).**

4. Assembly as claimed in claim 1, wherein said mechanical seal **(22)** comprises at least one stationary ring **(24),** one movable ring **(25)** facing said stationary ring **(24),** elastic means **(26)** acting on said moving ring **(25)** to bias it to sliding engage said stationary ring **(24).**

5. Assembly as claimed in claims 3 and 4, wherein said locking ring (30) has a tubular portion (31) locked in a first cylindrical seat (19) of the intermediate housing (11) with the interposition of a first O-ring, and wherein said stationary ring **(24)** is accommodated in a second cylindrical seat **(34)** formed in said locking ring **(30).**

6. Assembly as claimed in claim 4, wherein said movable ring **(25)** is accommodated in a first annular recess **(33)** of said locking ring **(30)** facing the impeller **(14).**

7. Assembly as claimed in claim 6, wherein an anti-slip ring **(37)** is locked in said first annular recess **(33)** and contacts said stationary ring **(24)** to prevent its displacement toward the impeller **(14)** when high vacuum condition is generated thereby.

8. Assembly as claimed in claim 7, wherein said anti-slip ring **(37)** is locked in said first annular recess **(33)** by means of a first elastic retaining ring **(38).**

9. Assembly as claimed in claim 1, wherein said mechanical seal **(22)** and said lip seal **(23)** are both attached to said spacer **(21)** to define a unitary cartridge assembly **(40),** which can be integrally removed from the shaft **(15)** when one or more of its components are being disassembled and replaced.

10. Assembly as claimed in claims 6-8, wherein said locking ring **(30)** has a tubular portion **(31)** with a second annular recess **(43)** to accommodate and stably attach said at least one lip seal **(23)** proximate an axial end of said tubular portion **(31)** distal from the locking ring **(14).**

11. Assembly as claimed in claim 10, wherein said spacer **(21)** has an annular groove **(41)** proximate one axial end thereof distal from the impeller **(14)** for a second elastic retaining ring or circlip **(42)** which axially locks said at least one lip seal **(23)** in said second annular recess **(43)** to define said cartridge assembly **(40).**

12. Assembly as claimed in claim 1, wherein a passage **(29)** is provided for a quench liquid to be sprayed on the wiping surfaces of said mechanical seal **(22)** when no liquid is present.

13. Assembly as claimed in claim 12, wherein the tubular portion **(31)** of said locking ring **(30)** has at least one pair of diametrically opposite through slots **(44),** normally aligned with said passage **(29)** for the quench fluid.

14. Assembly as claimed in claim 1, wherein only said mechanical seal **(22)** is attached to said spacer **(21)** to define a half-cartridge assembly **(50),** which can be pulled out of the shaft **(15)** to remove said mechanical seal **(22)** and access said at least one lip seal **(23).**

15. A method of servicing a self-priming centrifugal pump assembly **(1)** with a multifunctional sealing system **(20)** as claimed in one or more of the preceding claims, which method comprises at least the steps of:
**a)** providing in the pressure chamber **(12)** a suction port **(13)** whose inside diameter is larger than that of the impeller **(14)** and a front closing flange **(16)** whose inside diameter is smaller than that of the impeller **(14);**
**b)** disassembling a connecting joint **(7)** from the suction line;
**c)** removing the front closing flange **(16);**
**d)** axially pulling out the impeller **(14)** from the pressure chamber **(12);**
**e)** removing the screws **(36)** that fasten the locking ring **(30);**
**f)** removing the locking ring **(30)** from the compartment **(35)** of the intermediate housing **(11)** in combination with the cartridge assembly **(40)** with the lip seal **(23)** joined thereto; or
**f')** removing the locking ring **(30)** from the compartment **(35)** of the intermediate housing **(11)** in combination with the half-cartridge assembly **(50)** and removing the lip seal **(23);**
**g)** replacing the lip seal **(23)** and possibly the mechanical seal **(22)** or some of its components;
**h)** repositioning the locking ring **(30)** with the cartridge **(40)** or half-cartridge assembly **(50);**
**i)** mounting the impeller **(14)** back to the shaft **(15);**
**j)** mounting the connecting joint **(7)** back to the suction line;
wherein the removal of the impeller **(14)** from the shaft **(15)** and the locking ring **(30)** from the compartment **(35)** of the intermediate housing **(11),** as well as repositioning thereof, are carried out through the suction port **(13)** after disassembly and removal of the front closing flange **(16)** without completely disassembling the pump **(1);**
and wherein said steps **f)** or **f)'** are carried out without removing and accessing the bearings **(10', 10")** from the dry area **(9)** of the pump housing **(2).**

## Patentansprüche

1. Selbstansaugende Kreiselpumpenanordnung (1) mit einem multifunktionalen Dichtungssystem (20), wobei die Pumpe (1) ein Gehäuse (2) umfasst, das einen stromabwärtigen Nassbereich (8), der vom Fördermedium beaufschlagt ist, und einen stromaufwärtigen Trockenbereich (9), der nicht vom Fördermedium beaufschlagt ist und mit Lagern (10', 10") zur Abstützung einer Antriebswelle (15) versehen ist, aufweist, eine Spiral-Druckkammer (12), die in dem genannten stromabwärtigen Bereich (8) angeordnet ist, um ein Schaufelrad (14) aufzunehmen, das zur Befestigung auf der Welle (15) vorgesehen ist, und wobei das Dichtungssystem (20) umfasst:
- einen rohrförmigen Abstandshalter (21), der auf der Welle (15) montiert ist und zur Befestigung in der Nähe des Laufrads (14) vorgesehen ist;
- eine Gleitringdichtung (22), die an dem Abstandshalter (21) montiert ist;
- mindestens eine erste Lippendichtung (23);
- einen Sicherungsring (30) zur Befestigung der Gleitringdichtung (22) am Pumpengehäuse (2);
wobei der Sicherungsring (30) dafür ausgelegt ist, mittels lösbarer Befestigungsmittel (36) am Gehäuse (2) befestigt zu werden;
**dadurch gekennzeichnet, dass** die Druckkammer (12) eine Ansaugöffnung (13) aufweist, deren Innendurchmesser größer ist als der des Laufrads (14), sowie einen vorderen Abschlussflansch (16), dessen Innendurchmesser kleiner ist als der des Laufrads (14), wobei die lösbaren Befestigungsmittel (36) so ausgelegt sind, dass sie nach Entfernung des vorderen Abschlussflansches (16) durch die Ansaugöffnung (13) der Pumpe (1) zugänglich sind, sodass das Laufrad (14), die Gleitringdichtung (22) und die Lippendichtung (23) entfernt, ersetzt oder gewartet werden können, ohne die Pumpe (1) zu zerlegen und ohne Zugang zu den Lagern (10', 10") des Trockenbereichs (9) zu erhalten.

2. Anordnung nach Anspruch 1, wobei stromabwärts der mindestens einen Lippendichtung (23) mindestens eine Auslassöffnung (45) vorgesehen ist, um im Falle eines Ausfalls Fördermedium abzuführen und zu verhindern, dass Flüssigkeit den Trockenbereich (9) der Pumpe (1) erreicht und dadurch die Lager (10', 10") beschädigt.

3. Anordnung nach Anspruch 1, wobei der Sicherungsring (30) einen radialen Abschnitt (32) aufweist, der zur Aufnahme in einem Fach (35) eines Zwischengehäuses (11) des Pumpengehäuses (2) vorgesehen ist, wobei eine Mehrzahl von Bohrungen zur Durchführung von Schrauben vorgesehen ist, die die lösbaren Befestigungsmittel (36) bilden.

4. Anordnung nach Anspruch 1, wobei die Gleitringdichtung (22) mindestens einen stationären Ring (24), einen beweglichen Ring (25), der dem stationären Ring (24) gegenüberliegt, sowie elastische Mittel (26) umfasst, die auf den beweglichen Ring (25) einwirken, um diesen gleitend gegen den stationären Ring (24) zu drücken.

5. Anordnung nach den Ansprüchen 3 und 4, wobei der Sicherungsring (30) einen rohrförmigen Abschnitt (31) aufweist, der unter Zwischenschaltung eines ersten O-Rings in einem ersten zylindrischen Sitz (19) des Zwischengehäuses (11) verriegelt ist, und wobei der stationäre Ring (24) in einem zweiten zylindrischen Sitz (34) aufgenommen ist, der im Sicherungsring (30) ausgebildet ist.

6. Anordnung nach Anspruch 4, wobei der bewegliche Ring (25) in einer ersten ringförmigen Ausnehmung (33) des Sicherungsrings (30) aufgenommen ist, die dem Laufrad (14) zugewandt ist.

7. Anordnung nach Anspruch 6, wobei ein Rutschsicherungsring (37) in der ersten ringförmigen Ausnehmung (33) verriegelt ist und den stationären Ring (24) kontaktiert, um dessen Verschiebung in Richtung des Laufrads (14) zu verhindern, wenn dabei ein hoher Unterdruck erzeugt wird.

8. Anordnung nach Anspruch 7, wobei der Rutschsicherungsring (37) mittels eines ersten elastischen Sicherungsrings (38) in der ersten ringförmigen Ausnehmung (33) verriegelt ist.

9. Anordnung nach Anspruch 1, wobei die Gleitringdichtung (22) und die Lippendichtung (23) beide an dem Abstandshalter (21) befestigt sind, um eine einteilige Kartuschenbaugruppe (40) zu bilden, die vollständig von der Welle (15) abgezogen werden kann, wenn eine oder mehrere ihrer Komponenten demontiert und ersetzt werden.

10. Anordnung nach den Ansprüchen 6-8, wobei der Sicherungsring (30) einen rohrförmigen Abschnitt (31) mit einer zweiten ringförmigen Ausnehmung (43) aufweist, um die mindestens eine Lippendichtung (23) nahe einem axialen Ende des rohrförmigen Abschnitts (31) stabil aufzunehmen und zu befestigen.

11. Anordnung nach Anspruch 10, wobei der Abstandshalter (21) nahe einem axialen Ende, das vom Laufrad (14) abgewandt ist, eine ringförmige Nut (41) für einen zweiten elastischen Sicherungsring oder Sprengring (42) aufweist, der die mindestens eine Lippendichtung (23) axial in der zweiten ringförmigen Ausnehmung (43) verriegelt, um die Kartuschenbaugruppe (40) zu bilden.

12. Anordnung nach Anspruch 1, wobei ein Kanal (29) vorgesehen ist, durch den eine Spülflüssigkeit auf die Reibflächen der Gleitringdichtung (22) gesprüht wird, wenn keine Flüssigkeit vorhanden ist.

13. Anordnung nach Anspruch 12, wobei der rohrförmige Abschnitt (31) des Sicherungsrings (30) mindestens ein Paar diametral gegenüberliegender Durchgangsschlitze (44) aufweist, die normalerweise mit dem Kanal (29) für die Spülflüssigkeit ausgerichtet sind.

14. Anordnung nach Anspruch 1, wobei nur die Gleitringdichtung (22) an dem Abstandshalter (21) befestigt ist, um eine Halb-Kartuschenbaugruppe (50) zu bilden, die von der Welle (15) abgezogen werden kann, um die Gleitringdichtung (22) zu entfernen und Zugang zu der mindestens einen Lippendichtung (23) zu erhalten.

15. Verfahren zur Wartung einer selbstansaugenden Kreiselpumpenanordnung (1) mit einem multifunktionalen Dichtungssystem (20) nach einem oder mehreren der vorstehenden Ansprüche, wobei das Verfahren mindestens folgende Schritte umfasst:
a) Bereitstellen in der Druckkammer (12) einer Ansaugöffnung (13), deren Innendurchmesser größer ist als der des Laufrads (14), und eines vorderen Abschlussflansches (16), dessen Innendurchmesser kleiner ist als der des Laufrads (14);
b) Demontieren einer Verbindungsleitung (7) von der Saugleitung;
c) Entfernen des vorderen Abschlussflansches (16);
d) Axiales Herausziehen des Laufrads (14) aus der Druckkammer (12);
e) Entfernen der Schrauben (36), welche den Sicherungsring (30) befestigen;
f) Entfernen des Sicherungsrings (30) aus dem Fach (35) des Zwischengehäuses (11) in Kombination mit der daran befestigten Kartuschenbaugruppe (40) mit der Lippendichtung (23); oder
f') Entfernen des Sicherungsrings (30) aus dem Fach (35) des Zwischengehäuses (11) in Kombination mit der Halb-Kartuschenbaugruppe (50) und Entfernen der Lippendichtung (23);
g) Ersetzen der Lippendichtung (23) und gegebenenfalls der Gleitringdichtung (22) oder einzelner ihrer Komponenten;
h) Wiedereinsetzen des Sicherungsrings (30) mit der Kartuschenbaugruppe (40) oder der Halb-Kartuschenbaugruppe (50);
i) Wiederanbringen des Laufrads (14) an der Welle (15);
j) Wiederanbringen der Verbindungsleitung (7) an der Saugleitung;
wobei das Entfernen des Laufrads (14) von der Welle (15) und des Sicherungsrings (30) aus dem Fach (35) des Zwischengehäuses (11) sowie deren Wiedereinsetzen durch die Ansaugöffnung (13) nach Demontage und Entfernung des vorderen Abschlussflansches (16) erfolgt, ohne die Pumpe (1) vollständig zu zerlegen durchgeführt werden;
und wobei die genannten Schritte f) oder f') ohne Entfernen oder Zugreifen auf die Lager (10', 10") aus dem Trockenbereich (9) des Pumpengehäuses (2) durchgeführt werden.

## Revendications

1. Ensemble de pompe centrifuge auto-amorçante (1) muni d'un système d'étanchéité multifonctionnel (20), la pompe (1) comprenant un carter (2) comportant une zone humide aval (8) en contact avec le fluide de travail et une zone sèche amont (9) non en contact avec le fluide de travail et équipée de paliers (10', 10") destinés à supporter un arbre d'entraînement (15), une chambre de pression en volute (12) disposée dans ladite zone aval (8) pour loger une roue à aubes (14) conçue pour être clavetée sur ledit arbre (15), et dans laquelle le système d'étanchéité (20) comprend:
- une entretoise tubulaire (21) montée sur l'arbre (15) et destinée à y être fixée à proximité de la roue (14);
- un joint mécanique (22) monté sur ladite entretoise (21);
- au moins un premier joint à lèvre (23);
- une bague de verrouillage (30) destinée à fixer ledit joint mécanique (22) au carter de pompe (2);
ladite bague de verrouillage (30) étant conçue pour être fixée audit carter (2) au moyen de moyens de fixation amovibles (36);
**caractérisé en ce que** ladite chambre de pression (12) comporte un orifice d'aspiration (13) dont le diamètre intérieur est supérieur à celui de la roue (14) et une bride de fermeture frontale (16) dont le diamètre intérieur est inférieur à celui de ladite roue (14), lesdits moyens de fixation amovibles (36) étant configurés pour être accessibles à travers l'orifice d'aspiration (13) de la pompe (1) après retrait de la bride de fermeture frontale (16), de manière à permettre le démontage, le remplacement ou l'entretien de la roue (14), dudit joint mécanique (22) et dudit joint à lèvre (23) sans démonter la pompe (1) et sans accéder aux paliers (10', 10") de ladite zone sèche (9).

2. Ensemble selon la revendication 1, dans lequel au moins un orifice de sortie (45) est prévu en aval dudit au moins un joint à lèvre (23) afin d'évacuer le fluide de travail en cas de défaillance et d'empêcher le liquide d'atteindre la zone sèche (9) de la pompe (1), ce qui endommagerait lesdits paliers (10', 10").

3. Ensemble selon la revendication 1, dans lequel la bague de verrouillage (30) comporte une portion radiale (32) destinée à être logée dans un logement (35) d'un carter intermédiaire (11) du carter de pompe (2), une pluralité de trous étant prévue pour le passage de vis définissant lesdits moyens de fixation amovibles (36).

4. Ensemble selon la revendication 1, dans lequel le joint mécanique (22) comprend au moins une bague fixe (24), une bague mobile (25) faisant face à ladite bague fixe (24), ainsi que des moyens élastiques (26) agissant sur ladite bague mobile (25) afin de la solliciter en appui glissant contre ladite bague fixe (24).

5. Ensemble selon les revendications 3 et 4, dans lequel la bague de verrouillage (30) comporte une portion tubulaire (31) verrouillée dans un premier logement cylindrique (19) du carter intermédiaire (11) avec interposition d'un premier joint torique, et dans lequel ladite bague fixe (24) est logée dans un second logement cylindrique (34) formé dans ladite bague de verrouillage (30).

6. Ensemble selon la revendication 4, dans lequel ladite bague mobile (25) est logée dans une première gorge annulaire (33) de ladite bague de verrouillage (30) faisant face à la roue (14).

7. Ensemble selon la revendication 6, dans lequel une bague antiglissement (37) est verrouillée dans ladite première gorge annulaire (33) et entre en contact avec ladite bague fixe (24) afin d'empêcher son déplacement en direction de la roue (14) lorsqu'une condition de vide élevé est générée.

8. Ensemble selon la revendication 7, dans lequel ladite bague antiglissement (37) est verrouillée dans ladite première gorge annulaire (33) au moyen d'un premier anneau élastique de retenue (38).

9. Ensemble selon la revendication 1, dans lequel le joint mécanique (22) et le joint à lèvre (23) sont tous deux fixés à ladite entretoise (21) afin de définir un ensemble cartouche monobloc (40), lequel peut être retiré intégralement de l'arbre (15) lorsqu'un ou plusieurs de ses composants doivent être démontés et remplacés.

10. Ensemble selon les revendications 6 à 8, dans lequel la bague de verrouillage (30) comporte une portion tubulaire (31) munie d'une seconde gorge annulaire (43) destinée à loger et fixer de manière stable ledit au moins un joint à lèvre (23) à proximité d'une extrémité axiale de ladite portion tubulaire (31) opposée à la roue (14).

11. Ensemble selon la revendication 10, dans lequel l'entretoise (21) comporte une gorge annulaire (41) à proximité d'une extrémité axiale opposée à la roue (14) pour un second anneau élastique de retenue ou circlip (42) qui verrouille axialement ledit au moins un joint à lèvre (23) dans ladite seconde gorge annulaire (43) afin de définir ledit ensemble cartouche (40).

12. Ensemble selon la revendication 1, dans lequel un passage (29) est prévu pour projeter un liquide de trempe sur les surfaces de frottement dudit joint mécanique (22) lorsque aucun liquide n'est présent.

13. Ensemble selon la revendication 12, dans lequel la portion tubulaire (31) de ladite bague de verrouillage (30) comporte au moins une paire de lumières traversantes (44) diamétralement opposées, normalement alignées avec ledit passage (29) pour le liquide de trempe.

14. Ensemble selon la revendication 1, dans lequel seul le joint mécanique (22) est fixé à ladite entretoise (21) afin de définir un ensemble demi-cartouche (50), lequel peut être extrait de l'arbre (15) pour retirer ledit joint mécanique (22) et accéder audit au moins un joint à lèvre (23).

15. Procédé d'entretien d'un ensemble de pompe centrifuge auto-amorçante (1) muni d'un système d'étanchéité multifonctionnel (20) selon une ou plusieurs des revendications précédentes, le procédé comprenant au moins les étapes suivantes:
a) prévoir dans la chambre de pression (12) un orifice d'aspiration (13) dont le diamètre intérieur est supérieur à celui de la roue (14) et une bride de fermeture frontale (16) dont le diamètre intérieur est inférieur à celui de la roue (14);
b) démonter un raccord de connexion (7) de la conduite d'aspiration;
c) retirer la bride de fermeture frontale (16);
d) extraire axialement la roue (14) de la chambre de pression (12);
e) retirer les vis (36) qui fixent la bague de verrouillage (30);
f) retirer la bague de verrouillage (30) du logement (35) du carter intermédiaire (11) en combinaison avec l'ensemble cartouche (40) auquel le joint à lèvre (23) est associé; ou
f') retirer la bague de verrouillage (30) du logement (35) du carter intermédiaire (11) en combinaison avec l'ensemble demi-cartouche (50) et retirer le joint à lèvre (23);
g) remplacer le joint à lèvre (23) et éventuellement le joint mécanique (22) ou certains de ses composants;
h) repositionner la bague de verrouillage (30) avec l'ensemble cartouche (40) ou l'ensemble demi-cartouche (50);
i) remonter la roue (14) sur l'arbre (15);
j) remonter le raccord de connexion (7) sur la conduite d'aspiration;
dans lequel le retrait de la roue (14) de l'arbre (15) et de la bague de verrouillage (30) du logement (35) du carter intermédiaire (11), ainsi que leur repositionnement, sont effectués à travers l'orifice d'aspiration (13) après démontage et retrait de la bride de fermeture frontale (16), sans démonter complètement la pompe (1);
et dans lequel lesdites étapes f) ou f') sont réalisées sans retirer ni accéder aux paliers (10', 10") de la zone sèche (9) du carter de pompe (2).
